# EUROPÄISCHE PATENTSCHRIFT

(11) **EP 0 534 259 B1**
(45) Veröffentlichungstag und Bekanntmachung des Hinweises auf die Patenterteilung: **07.01.1998**
(21) Anmeldenummer: 92115665.9
(22) Anmeldetag: 14.09.1992
(51) Int. Cl.: G04G 15/00, H02G 3/18, E06B 9/32, E06B 9/70

(54) **Elektronisches Steuergerät**
Electronic control apparatus
Dispositif de commande électronique

(30) Priorität: 27.09.1991 DE 9112055 U
(43) Veröffentlichungstag der Anmeldung: 31.03.1993
(73) Patentinhaber: Rademacher, Wilhelm, 46414 Rhede (DE)
(72) Erfinder: Rademacher, Wilhelm, 46414 Rhede (DE)
(74) Vertreter: von Rohr, Hans Wilhelm, Dipl.-Phys.

(56) Entgegenhaltungen:
- EP-A- 0 448 087
- DE-A- 3 821 202
- US-A- 4 121 147
- US-A- 4 657 334

## Beschreibung

Die Erfindung betrifft ein elektronisches Steuergerät mit den Merkmalen des Oberbegriffs von Anspruch 1.

Das aus der Praxis bekannte elektronische Steuergerät, von dem die Erfindung ausgeht (Prospekt "Troll und Fernotron von Rademacher" der Firma Rademacher Geräte-Elektronik GmbH & Co. KG von Januar 1991; ähnlich auch die EP - A - 0 448 087). dient der Steuerung von elektrischen Einrichtungen in Abhängigkeit von der Zeit und ggf. auch von anderen Parametern. Insbesondere dient das bekannte elektronische Steuergerät dazu, Rolläden oder Jalousien zu steuern, also in Verbindung mit einem Rohrmotor oder einem anderen Antrieb zu öffnen und zu schließen. Das bekannte elektronische Steuergerät weist im Elektronikmodul eine elektronische Steuerungsschaltung auf, die über Drucktasten als Bedienelemente so programmierbar ist, daß anschließend eine automatische, zeitabhängige, ggf. auch einstrahlungsabhängige Steuerung eines Rolladens oder einer Jalousie möglich ist. Dieses elektronische Steuergerät arbeitet mit einem Rohrmotor zusammen, der an anderer Stelle, nämlich im Rolladenkasten, eingebaut ist. Das Steuergerät selbst ist in eine Norm-Anschlußdose, regelmäßig in eine handelsübliche 58 mm-Unterputz-Anschlußdose eingebaut. In der Norm-Anschlußdose münden die Phasenleitung und die Nulleitung des Hausinstallations-Netzes. Außerdem münden hier zwei Steuerleitungen, die von dem Rohrmotor im Rolladenkasten kommen. Die Versorgungs- und Steuerleitungen laufen an den Anschlußklemmen des Anschlußklemmenblockes zusammen. Dieser ist mittels eines Norm-Befestigungskäfigs in der Norm-Anschlußdose befestigt. Ein solcher Norm-Befestigungskäfig weist zum Befestigen entweder Spreizklammern oder Dosenschrauben zum unmittelbaren Befestigen an der Anschlußdose auf. Der Elektronikmodul mit seinem Gehäuse ist mit der Frontblende verbunden und läßt sich mit seinen von der Rückseite abragenden, nebeneinander angeordneten Kontaktstiften in die Kontakthülsen am Anschlußklemmenblock einstecken. Bei dem bekannten elektronischen Steuergerät hat man vier Kontaktstifte, nämlich für zwei Versorgungsleitungen und zwei Steuerleitungen. Es wird regelmäßig aber mindestens drei Kontaktstifte benötigen, nämlich für zwei Versorgungsleitungen und eine Steuerleitung, wenn man beispielsweise mit einem zyklisch durchlaufenden Motor als Antriebsmotor arbeitet.

Auf der Frontfläche des Elektronikmoduls des bekannten elektronischen Steuergerätes finden sich neben den Bedienelementen noch eine LCD-Anzeige als Anzeigeelemente, ggf. auch Leuchtdioden etc. Auch Anschlußbuchsen für externe Steuerelemente, beispielsweise Sonnensensoren od. dgl., kann man hier finden.

Das bekannte elektronische Steuergerät ist schon sehr zweckmäßig, da es unter Nutzung einer Norm-Anschlußdose eingesetzt werden kann. Noch zweckmäßiger wäre es natürlich, wenn man sonstige Normteile verwenden könnte, das scheitert aber an der erforderlichen elektrischen Verbindung zwischen dem Elektronikmodul einerseits und dem Anschlußklemmblock andererseits.

Die EP - A - 0 448 087 offenbart ein Steuergerät für eine elektronische Rolladensteuerung. Dieses Steuergerät umfaßt ein in eine handelsübliche Normdose eingebautes Leistungsteil mit einem Steckverbinder, in den ein als Stecker ausgebildetes Steuerteil einsteckbar ist. Dabei umfaßt das Steuerteil Kontaktstifte, die in Kontaktbuchsen des Steckverbinders im Leistungsteil einsteckbar sind. Die Verwendung eines Norm-Befestigungskäfigs, der einen Anschlußklemmenblock trägt, ist nicht beschrieben. Des weiteren zeigt diese Druckschrift weder die Verwendung einer am Befestigungskäfig bzw. der Anschlußdose anzubringenden Frontblende noch die Verwendung einer Norm-Schutzkontaktblende. Die Anbringung von Norm-Formschlußelementen eines Norm-Schutzkontaktsteckers an der Rückseite des Elektronikmoduls bzw. Steuerteils ist auch nicht offenbart.

Die US - A - 4,657,334 betrifft eine modulare Telefonanschlußeinheit. Hierbei ist ein Anschlußteil mit an Telefonleitungen angeschlossenen Steckbuchsen fest in einer Wand montiert. Ein zweites Anschlußteil weist eine Abdeckplatte mit rückseitigen Kontaktstiften, die mit einer vorderseitigen Anschlußbuchse verbunden sind, auf. Das zweite Anschlußteil ist mit seinen Kontaktstiften in die Kontaktbuchsen des ersten Anschlußteils einsteckbar, wobei die Abdeckplatte im eingestecktem Zustand das erste Anschlußteil überdeckt. Diese Anschlußeinheit stellt kein elektronisches Steuergerät dar. Das ggf. als Anschlußdose anzusehende erste Anschlußteil trägt keine fest verbundene Frontblende. Das zweite Anschlußteil weist rückseitig keine Norm-Formschlußelemente eines Norm-Schutzkontaktsteckers auf.

Die US - A - 4,121,147 beschreibt ein Leistungsmeßgerät für das Stromnetz, wobei ein herkömmliches Strommeßgerät mit einem Spitzenwertmesser nachrüstbar ist, indem dieser Spitzenwertmesser zwischen dem Leistungsmeßgerät und einer Anschlußdose einsteckbar ist. Diese Druckschrift offenbart weder ein elektronisches Steuergerät noch ist die Verwendung einer genormten Frontblende an der Anschlußdose offenbart.

Die DE - A - 38 21 202 ist auf ein elektronisches Steuergerät in Form einer Steckdosen-Schaltuhr gerichtet, die an einem Gehäuse rückseitig einen Norm-Schutzkontaktstecker zum Einstecken in eine Norm-Schutzkontaktsteckdose für die Stromzuführung aufweist. Die Schaltuhr weist ferner eine im Gehäuse angeordnete und mit auf der Frontseite des Gehäuses angeordneten Bedienelementen versehene Schaltungsanordnung auf, die in Abhängigkeit vom Schaltzustand eine Stromverbindung zwischen dem Schutzkontaktstecker und einer auf der Vorderseite des Gehäuses angeordneten Schutzkontaktsteckdose herstellt. Ein von der Schaltuhr zu steuerndes Gerät ist dementsprechend mit einem Stecker an der vorderseitigen Norm-Schutzkontaktsteckdose der Schaltuhr anzuschließen. Das Steuergerät ist nicht in eine Norm-Anschlußdose einbaubar, sondern nur an eine solche anschließbar. Dementsprechend eignet sich dieses bekannte Steuergerät nicht für die Steuerung von Rolladen- oder Jalousienmotoren, deren Steuerleitungen unter Putz verlegt und zu einer Anschlußdose geführt werden. Weiterhin ist bei diesem Steuergerät kein von dem Anschlußklemmenblock für Versorgungs- und Steuerleitungen trennbarer Elektronikmodul vorgesehen. Des weiteren ist keine Norm-Schutzkontaktblende vorgesehen, die sowohl von Kontaktstiften für die Stromversorgung als auch von Kontaktstiften zur Herstellung einer Steuerverbindung durchgriffen ist.

Der Erfindung liegt die Aufgabe zugrunde, das bekannte elektronische Steuergerät herstellungstechnisch und anbringungstechnisch zu vereinfachen.

Die zuvor aufgezeigte Aufgabe ist bei einem elektronischen Steuergerät mit den Merkmalen des Oberbegriffs von Anspruch 1 durch die Merkmale des kennzeichnenden Teils von Anspruch 1 gelöst. Erfindungsgemäß ist erkannt worden, daß man für das elektronische Steuergerät als Spezialteile nur einerseits den Elektronikmodul und andererseits den Anschlußklemmblock benötigt. Alle anderen Teile könnten im Grundsatz von normalen Installations-Normteilen stammen bzw. unter Nutzung vorhandener Bestandteile von Installations-Normteilen eingebaut werden, wenn nicht das Problem der Kontaktierung zwischen Elektronikmodul und Anschlußklemmblock vorhanden wäre. Dieses wird nun erfindungsgemäß dadurch gelöst, daß in einem Norm-Teil, nämlich in der Norm-Schutzkontaktblende ohnehin vorhandene Durchtrittsöffnungen einerseits für Kontaktstifte, andererseits für einen Schutzkontaktbügel oder einen Schutzkontaktstift nutzbar gemacht werden. Dies geschieht dadurch, daß die Anordnung der Kontaktstifte und Kontakthülsen am Elektronikmodul bzw. am Anschlußklemmblock entsprechend passend gewählt wird.

Für das erfindungsgemäße elektronische Steuergerät kann man zusätzlich zu der Norm-Anschlußdose und dem Norm-Befestigungskäfig nun auch eine Norm-Schutzkontaktblende, ggf. mit untergelegtem Norm-Blendrahmen nutzen. Bei Nachrüstung des Steuergerätes kann man an eine normale Schutzkontakt-Steckdose in der Wand eines Hauses herangehen, von dieser Schutzkontakt-Steckdose nur den im Inneren liegenden Anschlußklemmenblock auswechseln und gegen den Anschlußklemmenblock des elektronischen Steuergerätes austauschen und, nach Anschluß der Versorgungs- und Steuerleitungen, den Elektronikmodul einsetzen. Das ist außerordentlich preisgünstig, schnell und zweckmäßig zu realisieren.

Eine Schutzkontakt-Steckdose hat in Deutschland zwei Kontaktstifte und zwei Schutzkontaktbügel, die durch seitliche Durchtrittsöffnungen in den Aufnahmeraum für den Schutzkontakt-Stecker greifen. Folglich kann man ohne weiteres diese vier Durchtrittsöffnungen, die bei Wegfall des normalen Anschlußklemmenblockes nicht blockiert sind, für den Durchtritt der Kontaktstifte des Elektronikmoduls nutzen. Das entspricht dem normalen Wechselspannungs-Hausinstallations-Netz. Bei Drehstrom-Einsatz, beispielsweise für schwere Garagentore od. dgl., oder bei Nutzung von zwei Phasen eines Drehstromnetzes, stehen ebenfalls mehrere Durchtrittsöffnungen zur Verfügung. Im Ausland hat man mitunter nur dreipolige Norm-Schutzkontaktblenden, weil nur ein Schutzkontaktstift vorhanden ist. Im Grundsatz ist die Lehre der Erfindung von der Anzahl der Kontaktstifte und Schutzkontaktbügel oder -stifte jedoch unabhängig, sie läßt sich stets entsprechend angepaßt realisieren.

Es gibt nun verschiedene Möglichkeiten, die Lehre der Erfindung auszugestalten und weiterzubilden, wozu auf die dem Anspruch 1 nachgeordneten Ansprüche verwiesen werden darf. Einige besonders interessante Ansprüche sollen nachfolgend noch kurz erläutert werden.

Die erfindungsgemäße Konstruktion bietet die Möglichkeit, den Elektronikmodul mechanisch besonders sicher mit dem Anschlußklemmenblock zu verbinden, tatsächlich ist es nämlich so, daß Norm-Schutzkontaktblenden mit sehr ausgefeilten und wirksamen Formschlußelementen zur mechanischen Verbindung mit einem Schutzkontakt-Stecker versehen sind. Wenn man nun am Gehäuse des Elektronikmoduls auf der Rückseite solche Norm-Formschlußelemente eines Norm-Schutzkontaktsteckers ausbildet, erhält man so auch eine entsprechend vorzügliche mechanische Fixierung des Elektronikmoduls.

Interessant wäre eine stark miniaturisierte Lösung des elektronischen Steuergerätes, bei der der Elektronikmodul im Aufnahmeraum der Norm-Schutzkontaktblende Platz findet, wie etwa im Anspruch 3 geschildert. Damit ist das Steuergerät auch gegen mechanische Beschädigung gut geschützt.

Im folgenden wird die Erfindung anhand einer lediglich ein Ausführungsbeispiel darstellenden Zeichnung näher erläutert. In der Zeichnung zeigt
- Fig. 1: ein Beispiel eines Schaltplans für ein elektronisches Steuergerät der in Rede stehenden Art, hier in Verbindung mit einem Rolladen-Rohrmotor,
- Fig. 2: in eine Sprengdarstellung ein erfindungsgemäßes elektronisches Steuergerät in Verbindung mit einer Norm-Anschlußdose, hier einer Norm-Unterputz-Anschlußdose.

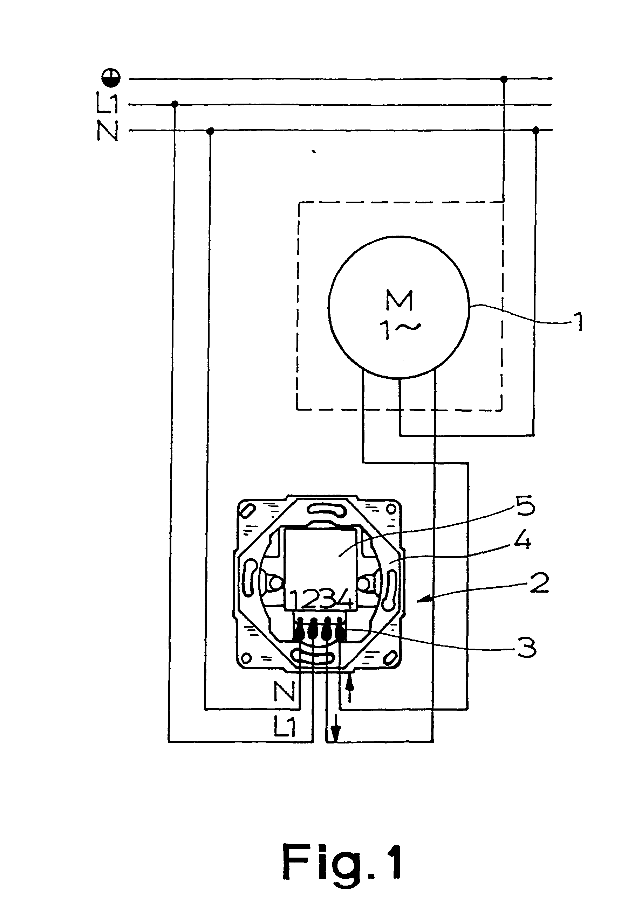

Fig. 1 zeigt ein elektronisches Steuergerät für einen Rolladen-Rohrmotor 1, der über eine direkte Leitung an einen Nulleiter N eines Hausinstallations-Wechselspannungsnetzes und über einen üblichen Schutzleiteranschluß an den Schutzleiter des Netzes angeschlossen ist. Der Phasenleiter L1 des Netzes ist mit dem elektronischen Steuergerät verbunden, über dieses wird der Rolladen-Rohrmotor 1 über Steuerleitungen gesteuert.

Angedeutet ist der Einbau des elektronischen Steuergerätes in eine Norm-Anschlußdose 2, hier eine Unterputz-Anschlußdose. Erkennbar ist ein Anschlußklemmenblock 3, der von einem Norm-Befestigungskäfig 4 in der Anschlußdose 2 getragen wird. Der Anschlußklemmenbock 3 befindet sich am unteren Rand des Norm-Befestigungskäfigs 4, der darüber befindliche Aufnahmeraum 5 kann den hier nicht dargestellten, von vorn aufsteckbaren Elektronikmodul zum Teil aufnehmen. Diese ist eine Installationsvariante für ein aus dem Stand der Technik bekanntes elektronisches Steuergerät, bei dem also die Kontakthülsen des Anschlußklemmenblocks 3 alle am unteren Rand des Norm-Befestigungskäfigs 4 angeordnet sind. Um dieses elektronische Steuergerät in einer Norm-Anschlußdose 2 unterzubringen, muß man also nicht nur den Anschlußklemmenblock 3 ersetzen, sondern auch eine etwa vorhandene Frontblende.

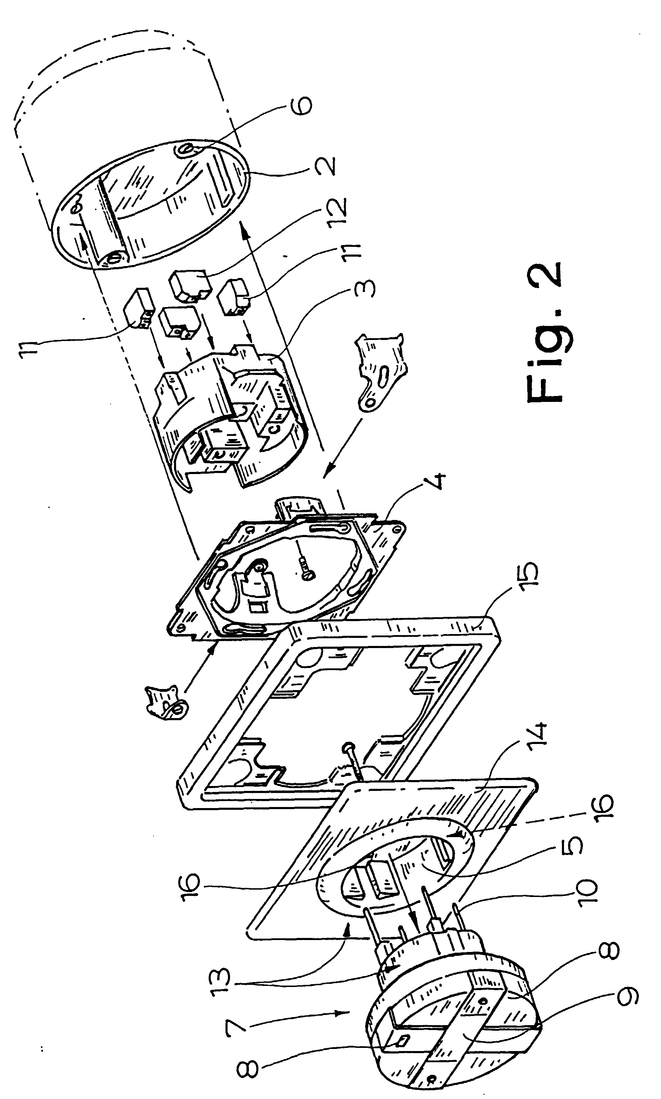

Fig. 2 zeigt in einer Sprengdarstellung ein erfindungsgemäßes elektronisches Steuergerät.

Das in Fig. 2 in einem bevorzugten Ausführungsbeispiel dargestellte erfindungsgemäße elektronische Steuergerät ist zunächst auch, wie das bekannte Steuergerät, in einer Norm-Anschlußdose 2, hier dargestellt als übliche Unterputz-Anschlußdose mit 58 mm Durchmesser einbaubar bzw. eingebaut. Ein solches elektronisches Steuergerät weist zunächst den schon erläuterten Anschlußklemmenblock 3, den schon erläuterten Norm-Befestigungskäfig 4 für den Anschlußklemmenblock 3 sowie eine an dem Norm-Befestigungskäfig 4 angebrachte, diesen verdeckende Frontblende auf. Ein Norm-Befestigungskäfig 4 der hier dargestellten Art kann entweder über, hier nicht dargestellte Spreizklammern in der Anschlußdose 2 verspannt werden oder, wie hier dargestellt, über Dosenschrauben an der Anschlußdose 2 befestigt werden, die in Gewindebohrungen 6 in der Anschlußdose 2 eingeschraubt werden können. Auch andere Befestigungsarten sind bei anders gestalteten Norm-Befestigungskäfigen 4 denkbar.

An dem Norm-Befestigungskäfig 4 ist eine diesen verdeckende Frontblende angebracht, an der wiederum ein Elektronikmodul 7 mit Bedien- und Anzeigeelementen 8, 9 angebracht ist. Bei einem elektronischen Steuergerät für einen Rohrmotor 1 eines Rolladens sind übliche Bedienelemente 8 verschiedene Drucktasten, nämlich eine Drucktaste senken, eine Drucktaste heben, eine Drucktaste stop bzw. set, eine Taste zur Einstellung der Uhrzeit und eine Schalttaste oder ein Schalter zur Umstellung von manuell auf automatisch. Bedienelemente 8 können auch Trimmpotentiometer od. dgl. sein. Ein Anzeigeelement 9 ist regelmäßig eine LCD-Anzeige zur Angabe der Uhrzeit, auch eine Leuchtdiode zur Funktionsanzeige oder mehrerer Leuchtdioden können als Anzeigeelemente 9 eingesetzt werden.

Wie Fig. 2 zeigt, weist der Elektronikmodul 7 auf der Rückseite Kontaktstifte 10 auf. Der Anschlußklemmenblock 3 weist einerseits Anschlußklemmen 11 für Versorgungs- und Steuerleitungen, wie in Fig. 1 dargestellt, auf, andererseits, und zwar auf der Vorderseite, Kontakthülsen 12 für die Kontaktstifte 10 des Elektronikmoduls 7. Auch eine umgekehrte Zuordnung ist im Grundsatz denkbar, wenn auch nicht sehr verbreitet. Über die Kontaktstifte 10 in den Kontakthülsen 12 und ggf. auch über ineinander greifende Formschlußelemente 13 am Gehäuse einerseits und an der Frontblende andererseits ist der Elektronikmodul 7 mechanisch und elektrisch mit dem Anschlußklemmenblock 3 verbunden.

Für die Lehre der Erfindung ist nun wesentlich, daß die Frontblende als Norm-Schutzkontaktblende 14, hier und nach bevorzugter Lehre mit untergelegtem Norm-Blendrahmen 15 ausgeführt ist. Die Norm-Schutzkontaktblende 14 weist - die üblichen - Durchtrittsöffnungen 16 für mindestens zwei Kontaktstifte und mindestens einen Schutzkontaktbügel und -stift auf, in Fig. 2 ist nur eine Durchtrittsöffnung 16 für einen der Kontaktstifte eingezeichnet, durch den gestrichelten Pfeil ist ein leerer Aufnahmekanal für einen Schutzkontaktbügel identifiziert, an dessen hier verdecktem Ende eine weitere Durchtrittsöffnung 16 für den Schutzkontaktbügel liegt, der hier bei dem elektronischen Steuergerät eben nicht vorhanden ist. Diese vorhandenen Durchtrittsöffnungen 16, die aber hier nicht, wie bei einer Schutzkontaktsteckdose, besetzt sind, werden nun für die Kontaktstifte 10 genutzt. Es gilt dabei, daß die Kontaktstifte 10 am Elektronikmodul 7 und die Kontakthülsen 12 am Anschlußklemmenblock 3 (oder umgekehrt) passend zu diesen Durchtrittsöffnungen 16 angeordnet sind. Das macht Fig. 2 ganz ohne weiteres deutlich.

So wird es möglich, daß die Kontaktstifte 10 auf der Rückseite des Elektronikmoduls 7 durch die Durchtrittsöffnungen 16 hindurch in die Kontakthülsen 12 des Anschlußklemmenblocks 3 eingesteckt sind. Auf diese Weise hat man zwanglos die Voraussetzungen, die eine Norm-Schutzkontaktblende 14 mit den dort ohnehin vorhandenen Durchtrittsöffnungen 16 bietet, für die Optimierung eines erfindungsgemäßen elektronischen Steuergerätes genutzt.

Im allgemeinen Teil der Beschreibung ist schon darauf hingewiesen worden, daß länderabhängig unterschiedliche Norm-Schutzkontakt-Steckdosen oder -steckverbindungen verwendet werden, entsprechend angepaßte elektronische Steuergeräte lassen sich ohne weiteres realisieren.

Das dargestellte Ausführungsbeispiel zeichnet sich nun weiter dadurch aus, daß am Gehäuse des Elektronikmoduls 7 auf der Rückseite Norm-Formschlußelemente 13 eines Norm-Schutzkontaktsteckers ausgebildet sind. Das hat die im allgemeinen Teil der Beschreibung angegebenen mechanisch-anbringungstechnischen Vorteile.

Nicht dargestellt ist hier ein Ausführungsbeispiel, bei dem der Elektronikmodul 7 in die Norm-Schutzkontaktblende 14 voll integriert ist, nämlich vom Aufnahmeraum 5 voll aufgenommen ist, wie im Anspruch 3 beschrieben. Wenn das so wäre, könnte man beispielsweise vorsehen, daß der Elektronikmodul mit mindestens einem Werkzeug-Angriffspunkt zum Herausziehen aus der Norm-Schutzkontaktblende versehen ist.

Beim in Fig. 2 dargestellten Ausführungsbeispiel eines erfindungsgemäßen elektronischen Steuergerätes hat man an der Frontseite mehr Platz und auch ein größeres Volumen zur Aufnahme der elektronischen Schaltung, nämlich dadurch, daß das Gehäuse des Elektronikmoduls 7 eine in die Schutzkontaktblende 14 einsteckbaren, ggf. die Formschlußelemente 13 und jedenfalls die Kontaktstifte 10 tragenden Teil und einen vorderen, vorzugsweise über den hinteren Teil seitlich überstehenden, Bedienungs- und Anzeigeelemente 8, 9 tragenden Teil aufweist. Hierbei gilt, daß aus optischen und ergonomischen Gründen, der vordere, die Bedien- und Anzeigeelemente 8, 9 tragende Teil kreisförmig ausgeführt ist.

Das hier dargestellte Ausführungsbeispiel eines erfindungsgemäßen elektronischen Steuergerätes zeichnet sich auf der Frontfläche noch durch eine besondere Gestaltung aus, nämlich dadurch, daß die Frontfläche des Elektronikmoduls 7 durch zwei kreuzweise verlaufende, vorzugsweise ein Anzeigeelemente 9 umfassende Streifen in vier Quadranten aufgeteilt ist. Im quer verlaufenden Streifen ist das Anzeigeelement 9 harmonisch integriert, beidseits daneben sieht man angedeutet Anschlußpunkte für externe Sensoren. Es könnte sich auch um Einstellungs-Druckpunkte für Uhrfunktionen handeln. Man erkennt im anderen Streifen oben einen manuell-/automatisch-Umschalter als Bedienelement 8. Auf sehr elegante Weise sind hier die weiteren Bedienelemente 8, nämlich die oben angegebenen Drucktasten realisiert. Jede Drucktaste bildet nämlich einen Quadranten des durch die Streifen aufgeteilten Feldes. Dies ist eine grundlegende Idee, die unabhängig von einer Quadrantenaufteilung realisiert werden kann, nämlich ganz generell dadurch, daß die Bedienelemente 8 als Drucktasten ausgeführt sind und jede Drucktaste einen großen Abschnitt der Frontfläche des Elektronikmoduls 7 bildet. Dadurch wird die durch Verkleinerung der Frontfläche verringerte Bedienfläche der Bedienelemente 8 doch wieder so groß, daß die Bedienung komfortabel und verwechslungsfrei erfolgen kann.

Installationstechnisch ist das dargestellte elektronische Steuergerät deshalb noch von besonderer Bedeutung, weil hier der Anschlußklemmenblock 3 selbst nochmals besonders gestaltet ist. Es handelt sich hier nämlich nicht um eine einfache Klemmenleiste, sondern um einen Anschlußklemmenblock 3 in Form eines Trägers, in den besondere Blöcke eingesetzt sind, die jeweils eine Anschlußklemme 1 und eine Kontakthülse 12 zusammenfassen. Im dargestellten und insoweit bevorzugten Ausführungsbeispiel gilt im übrigen, daß die Anschlußklemme 11 als Schraubanschlußklemme in einem Isoliergehäuse ausgeführt ist, was in Fig. 2 anhand der Anschlußleiter-Eintrittsöffnung im Isoliergehäuse ohne weiteres zu erkennen ist.

Insgesamt wird mit dem erfindungsgemäßen elektronischen Steuergerät ein unter bestmöglicher Nutzung von Normteilen einbaubares und insbesondere auch nachrüstbares Steuergerät beschrieben, das ganz besonders zweckmäßig für Steuerung von Jalousien und Rolladen, aber auch für alle anderen Steuerfunktionen eingesetzt werden kann.

## Patentansprüche

1. Elektronisches Steuergerät mit einem in eine Norm-Anschlußdose (2), vorzugsweise eine Unterputz-Anschlußdose, eingebauten Anschlußklemmenblock (3), einem Norm-Befestigungskäfig (4) für den Anschlußklemmenblock (3) und mit einem Elektronikmodul (7), der auf der Rückseite Kontaktstifte (10) aufweist, wobei der Anschlußklemmenblock (3) einerseits Anschlußklemmen (11) für Versorgungs- und Steuerleitungen und andererseits auf der Vorderseite Kontakthülsen (12) für die Kontaktstifte (10) des Elektronikmoduls (7) aufweist, so daß der Elektronikmodul (7) über die Kontaktstifte (10) mit den Kontakthülsen (12) in dem Anschlußklemmenblock (3) elektrisch verbunden ist,
**dadurch gekennzeichnet,**
daß eine Norm-Schutzkontaktblende (14) als den Norm-Befestigungskäfig (4) verdeckende Frontblende, ggf. mit unterlegtem Norm-Blendrahmen (15), am Norm-Befestigungskäfig (4) angebracht ist, wobei die Norm-Schutzkontaktblende (14) Durchtrittsöffnungen (16) für mindestens zwei Kontaktstifte (10) und mindestens einen Schutzkontaktbügel oder -stift aufweist, daß die Kontaktstifte (10) am Elektronikmodul (7) und die Kontakthülsen (12) am Anschlußklemmenblock (3) passend zu den Durchtrittsöffnungen (16) angeordnet und die Kontaktstifte (10) durch die Durchtrittsöffnungen (16) hindurch in die Kontakthülsen (12) eingesteckt sind und daß am Gehäuse des Elektronikmoduls (7) auf der Rückseite Norm-Formschlußelemente (13) eines Norm-Schutzkontaktsteckers ausgebildet sind, die in Norm-Formschlußelemente (13) an der Norm-Schutzkontaktblende (14) zur Herstellung einer mechanischen Verbindung eingreifen.

2. Elektronisches Steuergerät nach Anspruch 1, dadurch gekennzeichnet, daß der Elektronikmodul (7) mit der Norm-Schutzkontaktblende (14) bündige abschließt.

3. Elektronisches Steuergerät nach Anspruch 2, dadurch gekennzeichnet, daß der Elektronikmodul (7) mit mindestens einem Werkzeug-Angriffspunkt zum Herausziehen aus der Norm-Schutzkontaktblende (14) versehen ist.

4. Elektronisches Steuergerät nach Anspruch 1, dadurch gekennzeichnet, daß das Gehäuse des Elektronikmoduls (7) einen in die Norm-Schutzkontaktblende (14) einsteckbaren, die Norm-Formschlußelemente (13) und die Kontaktstifte (10) tragenden hinteren Teil und einen vorderen, vorzugsweise über den hinteren Teil seitlich überstehenden, Bedienungs- und Anzeigeelemente (8, 9) tragenden Teil aufweist.

5. Elektronisches Steuergerät nach Anspruch 4, dadurch gekennzeichnet, daß der vordere, die Bedien- und Anzeigeelemente (8, 9) tragende Teil kreisförmig ausgeführt ist.

6. Elektronisches Steuergerät nach einem der Ansprüche 1 bis 5, dadurch gekennzeichnet, daß die Frontfläche des Elektronikmoduls (7) durch zwei kreuzweise verlaufende, vorzugsweise ein Anzeigeelement (9) umfassende Streifen in vier Quadranten aufgeteilt ist.

7. Elektronisches Steuergerät nach einem der Ansprüche 1 bis 6, dadurch gekennzeichnet, daß die Bedienelemente (8) als Drucktasten ausgeführt sind und jede Drucktaste einen großen Abschnitt der Frontfläche des Elektronikmoduls (7), vorzugsweise einen Quadranten, bildet.

8. Elektronisches Steuergerät nach einem der Ansprüche 1 bis 7, dadurch gekennzeichnet, daß jeweils eine Anschlußklemme (11) und eine Kontakthülse (12) zu einem Block zusammengefaßt sind und, vorzugsweise, daß die Anschlußklemmen (11) als Schraubanschlußklemmen ausgeführt sind.

## Claims

1. An electronic control apparatus having a connection terminal block (3) installed in a standard connection box (2), preferably a flush-mounted connection box, having a standard fixing enclosure (4) for the connection terminal block (3), and having an electronics module (7) which has contact pins (10) on its back face, wherein the connection terminal block (3) firstly has connection terminals (11) for supply and control lines and secondly, on its front face, has contact sockets (12) for the contact pins (10) of the electronics module (7), so that the electronics module (7) is electrically connected to the contact sockets (12) in the connection terminal block (3) via the contact pins (10),
**characterised in that**
a standard earthing contact cover (14), optionally with a standard cover frame (15) placed underneath it, is mounted on the standard fixing enclosure (4) as the front cover which covers the standard fixing cage (4), wherein the standard earthing contact cover (14) has passageway openings (16) for at least two contact pins (10) and at least one earthing contact strip or pin, that the contact pins (10) are disposed on the electronics module (7) and the contact sockets (12) are disposed on the connection terminal block (3) so that they fit the passageway openings (16) and the contact pins (10) are inserted through the passageway openings (16) into the contact sockets (12), and that standard positive locking elements (13) of a standard earthing contact plug are formed on the back of the housing of the electronics module (7) and engage in standard positive locking elements (13) on the standard earthing contact cover (14) in order to form a mechanical connection.

2. An electronic control apparatus according to claim 1, characterised in that the electronics module (7) terminates flush with the standard earthing contact cover (14).

3. An electronic control apparatus according to claim 2, characterised in that the electronics module (7) is provided with at least one tool application point for withdrawing it from the standard earthing contact cover (14).

4. An electronic control apparatus according to claim 1, characterised in that the housing of the electronics module (7) comprises a back part which can be inserted in the standard earthing contact cover (14) and which carries the standard positive locking elements (13) and the contact pins (10), and a front part, which preferably protrudes laterally beyond the back part, and which carries operating and display elements (8, 9).

5. An electronic control apparatus according to claim 4, characterised in that the front part which carries the operating and display elements (8, 9) is of circular construction.

6. An electronic control apparatus according to any one of claims 1 to 5, characterised in that the front face of the electronics module (7) is divided into four quadrants by two strips which run crosswise and which preferably comprise a display element (9).

7. An electronic control apparatus according to any one of claims 1 to 6, characterised in that the operating elements (8) are designed as push-buttons, and each push-button forms a large section, preferably a quadrant, of the front face of the electronics module (7).

8. An electronic control apparatus according to any one of claims 1 to 7, characterised in that a connection terminal (11) and a contact socket (12) are assembled in each case to form a block, and that the connection terminals (11) are preferably designed as screw connection terminals.

## Revendications

1. Appareil de commande électronique comprenant un bloc de bornes de connexion (3) inséré dans une boîte de contact réglementaire (2), de préférence dans une boîte de contact encastrée, une cage de fixation réglementaire (4) pour le bloc de bornes de connexion (3) et un module électronique (7) qui présente des connecteurs mâles (10) sur son côté dorsal, dans lequel le bloc de bornes de connexion (3) présente, d'une part, des bornes de connexion (11) pour des lignes d'alimentation et pour des lignes pilotes et, d'autre part, sur le côté frontal, des connecteurs femelles (12) pour les connecteurs mâles (10) du module électronique (7), de telle sorte que le module électronique (7) est relié électriquement via les connecteurs mâles (10) aux connecteurs femelles (12) dans le bloc de bornes de connexion (3),
caractérisé en ce qu'on applique sur la cage de fixation réglementaire (4) un écran de sécurité réglementaire (14) sous forme d'un écran antérieur recouvrant la cage de fixation réglementaire (4), éventuellement inséré dans un cadre de protection réglementaire (15), l'écran de sécurité réglementaire (14) présentant des ouvertures de pénétration (16) pour au moins deux connecteurs mâles (10) et au moins une bride ou un connecteur de sécurité, en ce que les connecteurs mâles (10) sont disposés sur le module électronique (7) et les connecteurs femelles (12) sont disposés sur le bloc de bornes de connexion (3) de manière correspondante aux ouvertures de pénétration (16), les connecteurs mâles (10) étant enfichés dans les connecteurs femelles (12) en traversant de part en part les ouvertures de pénétration (16), et en ce qu'on réalise, sur le boîtier du module électronique (7), sur son côté dorsal, des éléments réglementaires (13) à engagement positif d'un connecteur de sécurité réglementaire, qui viennent s'insérer dans des éléments réglementaires (13) à engagement positif sur l'écran de sécurité réglementaire (14) pour la formation d'une liaison mécanique.

2. Appareil de commande électronique selon la revendication 1, caractérisé en ce que le module électronique (7) se termine à fleur avec l'écran de sécurité réglementaire (14).

3. Appareil de commande électronique selon la revendication 2, caractérisé en ce que le module électronique (7) est muni d'au moins un point d'ancrage d'outil pour le retirer de l'écran de sécurité réglementaire (14).

4. Appareil de commande électronique selon la revendication 1, caractérisé en ce que le boîtier du module électronique (7) présente une partie arrière portant les éléments réglementaires (13) à engagement positif et les connecteurs mâles (10) aptes à venir s'insérer dans l'écran de sécurité réglementaire (14), et une partie avant portant les éléments de manoeuvre et d'affichage (8, 9), de préférence faisant saillie latéralement par rapport à la partie arrière.

5. Appareil de commande électronique selon la revendication 4, caractérisé en ce que la partie avant portant les éléments de manoeuvre et d'affichage (8, 9) est réalisée en forme circulaire.

6. Appareil de commande électronique selon l'une quelconque des revendications 1 à 5, caractérisé en ce que la surface frontale du module électronique (7) est subdivisée en quatre quarts de cercle par deux bandes croisées, de préférence englobant un élément d'affichage (9).

7. Appareil de commande électronique selon l'une quelconque des revendications 1 à 6, caractérisé en ce que les éléments de manoeuvre (8) sont réalisés sous forme de boutons-poussoirs, et chaque bouton-poussoir forme une grande section de la surface frontale du module électronique (7), de préférence un quart de cercle.

8. Appareil de commande électronique selon l'une quelconque des revendications 1 à 7, caractérisé en ce que respectivement une borne de connexion (11) et un connecteur femelle (12) sont rassemblés en un bloc et, de préférence, en ce que les bornes de connexion (11) sont réalisées en forme de bornes de connexion à visser.
